# EUROPEAN PATENT APPLICATION

(11) **EP 2 408 143 A1**
(43) Date of publication of application: **18.01.2012**
(21) Application number: 10251158.1
(22) Date of filing: 25.06.2010
(51) Int. Cl.: H04L 12/24

(54) **Proactive resource management for virtual networks**

(71) Applicant: British Telecommunications Public Limited Company, London EC1A 7AJ (GB)
(72) Inventor: The designation of the inventor has not yet been filed
(74) Representative: Lidbetter, Timothy Guy Edwin

(57) **Abstract**

A network resource for provisioning of a plurality of virtual networks (1) monitors the virtual networks for traffic volume, and on being identifying one or more virtual networks for which the traffic volume exceeds a predetermined threshold value (step 71) automatically generates a revision plan (72) for the network resource to revise the network capacity allocated to the virtual network or networks so identified. The revision plan is provided to a human interface (6) to allow review and revision, and is then implemented (93) by re-programming a network resource facility (93).

## Description

This invention relates to the reconfiguration of network resources to meet changes in demand for capacity from different users. The invention is particularly concerned with the allocation of available bandwidth to different virtual networks according to the varying requirements of their users. : Such virtual networks include VLANs (virtual local area networks), frame relay, ATM (asynchronous transfer mode), and LSPs (label switched paths) used in MPLS (multi-protocol label switching).

A local area network (LAN) is a means of interconnecting a number of devices, usually for use by a limited number of users, for example a business. A "virtual" LAN is such a network which does not have its own dedicated hardware but is carried over a physical infrastructure which is shared with other users and is usually owned by another party. Capacity is reserved for each VLAN and communication between users of one LAN is logically partitioned from other VLANs.

The network operator needs to provide sufficient capacity on each VLAN to satisfy the requirements of the users of those VLANs. These requirements will vary over time as usage increases, and in particular as the operating speeds of users' apparatus and applications increase, as this will require a greater throughput of data over the VLAN.

The present invention provides a process for the proactive management of the capacity of VLANs. It is desirable that such a system should allow a capacity manager to change operating parameters of an individual VLAN, or to revise multiple SVLANs simultaneously in response to a network health indicator, without having to manually access an order handling system. Such changes might involve changes in bandwidth and/or call count limits, and synchronisation between such changes may be necessary to avoid the specification of incompatible call count limits and bandwidths, or bandwidths which breach the physical limits of the backhaul link.

According to the invention, a process for management of a network resource used for provisioning of a plurality of virtual networks comprises the steps of:
monitoring the virtual networks for traffic volume,
identifying one or more of the virtual networks for which the traffic volume exceeds a predetermined threshold value,
and automatically generating a revision plan for the network resource to revise the network capacity allocated to the virtual network or networks so identified.

The revision plan may be implemented automatically by re-programming the network resource facility, but in a preferred embodiment the revision plan is generated as an alert to a human interface, allowing an operator to over-ride the revision. This may be desirable if there are circumstances of which the operator is aware which suggest the additional capacity will not be required, or cannot be provided. Such situations may include a surge in demand which the operator knows to be temporary, or knowledge that satisfying demand for one virtual network cannot be achieved without detriment to other users, or will have to be deferred pending an upgrade in the network resources.

The process reduces the time taken to regrade a virtual network, and reduces the possibility of manual error which could result in misconfiguration.

In the preferred embodiment each virtual network has an initially-allocated capacity and the threshold value for that virtual network is a value at a predetermined margin below that capacity.

An embodiment of the invention will be described with reference to the Figures, in which:
Figure 1 is a schematic depiction of a network to which the invention may be applied, together with the functional elements which co-operate to perform the invention.
Figure 2 is a flow chart illustrating the operation of the process.
Figure 3 is a sequence diagram illustrating the information flows taking place during the operation of the process.
Figure 4 is a representation of example screens displayed by a user interface during the user interaction phase of the process.

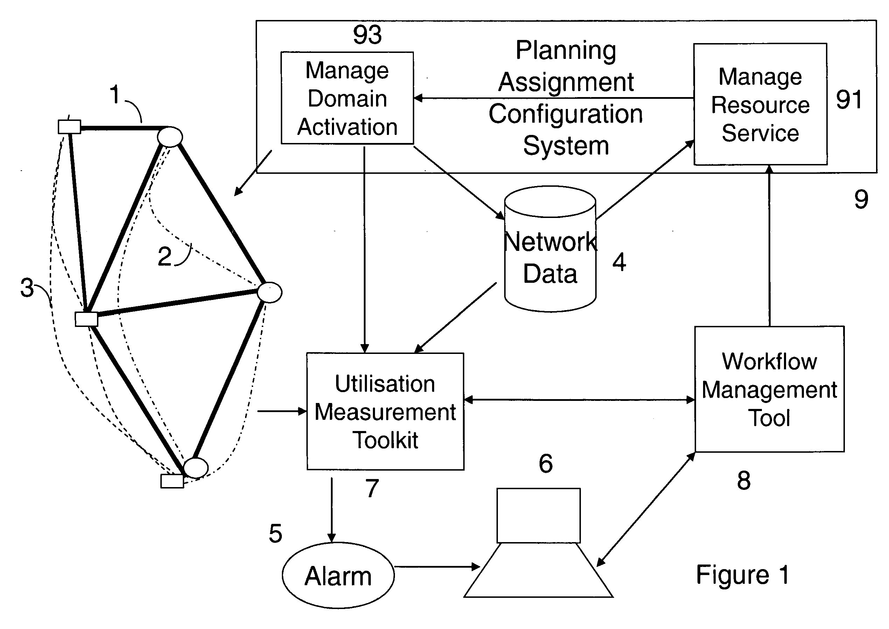

Figure 1 depicts a telecommunications network 1 providing facilities for two virtual networks 2, 3. The management of the network is controlled by a number of functional elements. It will be understood that these functional elements may each be embodied in software operating on one or more computers.

A database 4 is provided which stores data relating to the configuration of the physical network resources, and their current allocation to virtual networks.

The first element to be discussed is a utilisation measurement toolkit (UMT) 7. This system monitors the operation of the network to determine the loadings on individual connections, and generates an alarm 5 if utilisation of any part of the system approaches saturation. Typically one or more threshold conditions are set, and the alarm is triggered if any of these thresholds are exceeded.

The utilisation measurement toolkit 7 also has the capability to determine, with reference to the network data 4, the revisions to provision which would be necessary to avoid the alarm condition re-occurring.

The next functional element to be discussed is a workflow management tool (WFMT) 8. This function processes requests for changes to the network in response to the input from the utilisation measurement toolkit 7, and allows manual intervention through a user interface 6.

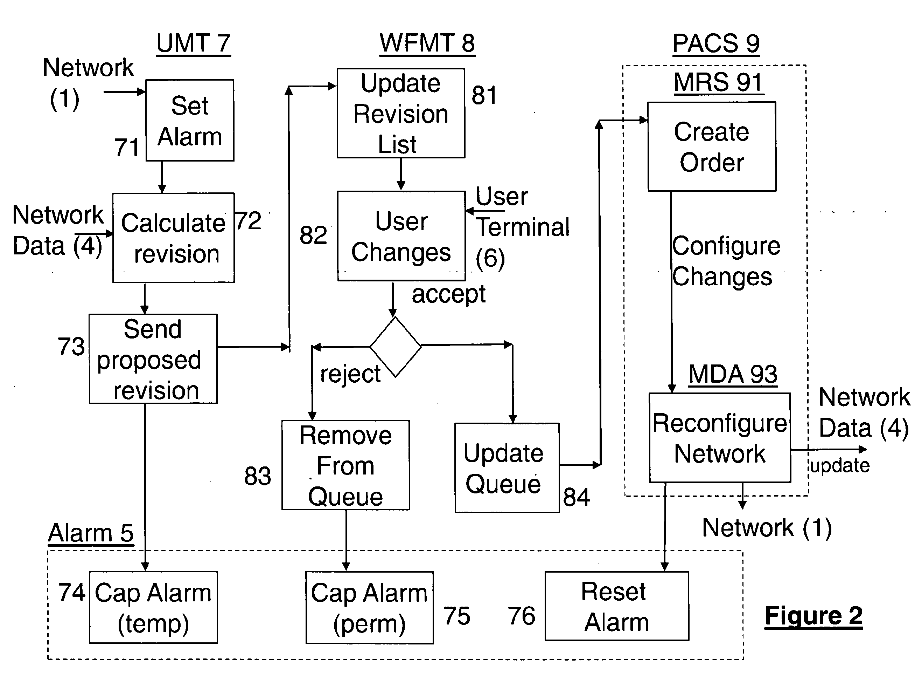

A planning assignment and configuration system (PACS) 9 controls two further functions to implement any changes to the network initiated by the management tool 8: these are a resource management service (MRS) 91, which allocates the resources to be used, and a management domain activation (MDA) processor 93 which actually implements the required changes. The operation of the system will now be described with reference to Figures 2, 3 and 4.

The utilisation measurement toolkit 7 receives data from the network 1 relating to the utilisation of the network by the virtual networks 2, 3. In particular, the UMT 7 is configured to detect if any part of the network has exceeded a predetermined threshold value for utilisation which may indicate a trend which could lead to impaired performance - for example, network congestion. Such measures may include latency (delay), and utilisation of bandwidth, memory, and CPU capacity. For voice connections, call counts are also an important factor. The system may also be used to detect under-utilisation, to provide information on where spare capacity may be made available for re-distribution to more congested applications.

In the event that a threshold is exceeded an alarm is set (71) in the alarm manager 5. This alarm manager 5 provides an output which can be accessed by a user through a terminal 6. This output may indicate the amount of activity in the system (e.g the number of alarms), the history (for example alarms in particular areas which are repeated despite attempts to resolve them) and any pattern management.

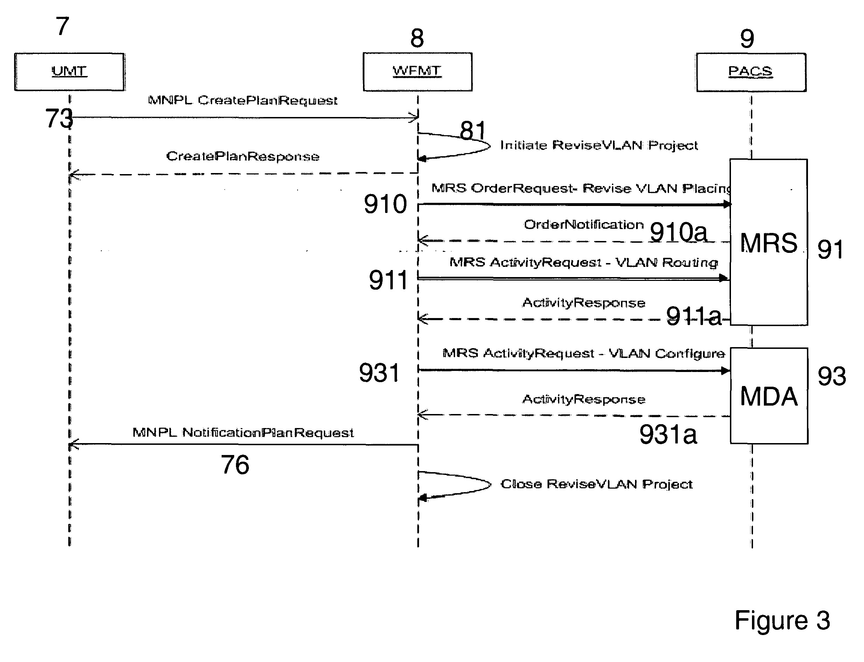

The UMT determines what revisions would be necessary to the network in order to resolve the conditions which caused the alarm (step 72), using the network database 4 to determine what resources are available. Such revisions may involve the allocation of spare switching capacity to a particular virtual network, re-routing data from an overloaded link to one less heavily-used. Revisions do not take place automatically, but are scheduled. They are also subject to intervention by the user 6. For this purpose, the utilisation measurement toolkit 7 forwards the proposed revisions (step 73) to the work flow management tool (WFMT) 8 - see Figure 3. This request for revision (73), as with all information flows in Figure 3, is acknowledged 73a: such acknowledgements are depicted in Figure 3 by dotted lines and referenced with a suffix "a".

The utilisation measurement toolkit also generates a temporary "cap" 74 to the alarm system, to prevent repeat alarms being raised for conditions for which a revision is in preparation. This prevents the generation of multiple fixes for the same problem, and avoids the generation of duplicate alarms at the user interface 6.

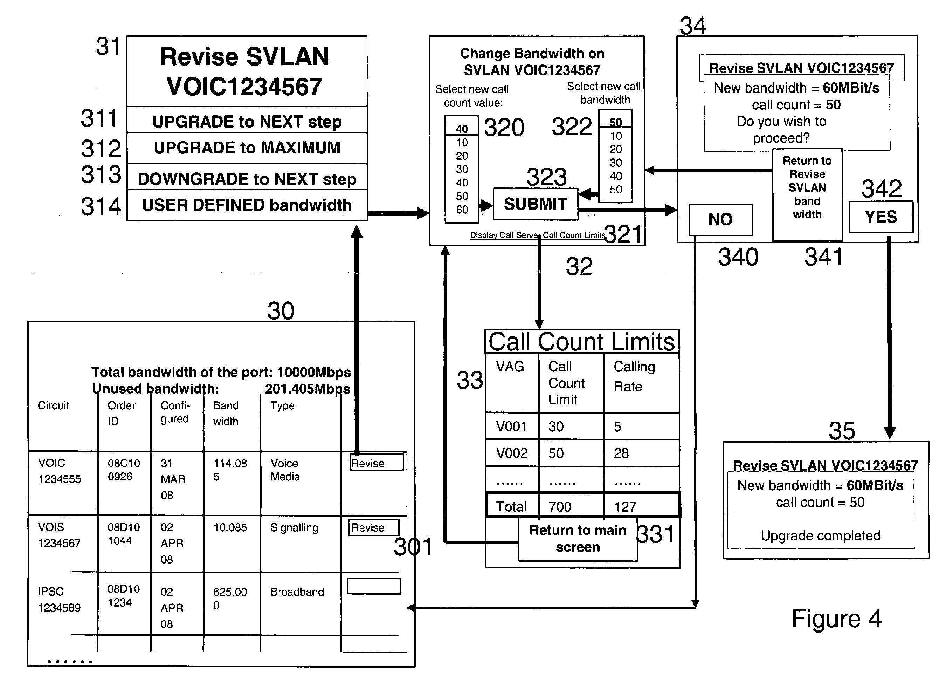

The Work Flow Management Tool 8 maintains a schedule of planned revisions to the provisioning, and this schedule is updated automatically (81) by the inputs from the utilisation measurement toolkit 7 as they arise. The schedule of planned revisions can include changes an individual VLAN, or several VLANs be covered by a single schedule. The proposed revisions can be viewed and modified by a user (step 82) using a user interface 6, depicted in Figure 4.

Figure 4 shows screenshots that may appear on the user interface 6 during the course of the viewing and modifying process 82. These screenshots have been simplified for clarity, and in particular it would be expected that the initial screenshot 30 would show data for more than two VLANs at once.

The first screen 30 displays data relating to each circuit in tabular format, indicating parameters such as booked bandwidth trends, per-VLAN utilisation trends, lost calls due to Call Counting, or Calls in Progress per VAG (virtual access gateway). The user can thus see how the conditions to which he has been alerted by the alarm system 5 may be resolved.

The user is given discretion as to whether a proposed change should be implemented. A button 301 is provided next to the data entry relating to each individual VLAN. When this button is selected, this triggers a "Revise VLAN" request screen 31. This gives two or more options for revising the bandwidth - in this example four options are presented:
- upgrade bandwidth to next step (311):
- upgrade bandwidth to maximum available bandwidth for that SVLAN type (312):
- downgrade bandwidth to next step (313):
- Upgrade / downgrade to a user defined bandwidth step (314)

The user can also be invited to upgrade or downgrade any associated call counts, but downgrade should not be offered unless the user has selected call counts compatible with the new proposed bandwidth, and the system should also prevent the user upgrading any call count without having first ensured that sufficient bandwidth is available. To do this, the user is presented with a further screen 32. This provides a menu 320 allowing the user to select a new call count value from a list of options valid for the selected bandwidth. The user may "click" on a link 321 to call up a pop-up screen 33 giving information on call counts and calling rates across the system. A button 331 allows the pop-up 33 to be closed again.

In the example depicted the user has not selected one of the suggested bandwidths (311, 312, 313) but has selected the fourth option (314) so a further menu 322 is also offered in the same screen as the call count selection 32, allowing the user to now select a new bandwidth: this menu would be omitted from this screen if one of the other options (311, 312, 313) had been selected in the revision screen 31. Only bandwidth options that are valid for current utilisation levels of the physical link and port are displayed.

Once a bandwidth and call count value have been selected, a submit button 323 is enabled allowing the user to submit the change request. This raises a confirmation screen 34 which gives the user the option of cancelling (340), which returns the user to the main screen 30, or of revising the changes (341) which returns the user to the previous (call count/bandwidth selection) screen 32, or of confirming the change (342) which presents the user with a final confirmation screen 35. The change instruction is then fed directly to the PACS 9.

If the user intervention is not in accordance with the planned change, the proposal is removed from the queue (83) and the UMT is instructed to convert the temporary cap on the alarm to a permanent cap (75). If the change is accepted, possibly with modifications, the queued item is flagged as having been permitted (step 84) and sent to the Planning Assignment and Configuration System (PACS) 9 (steps 910, 911, 931).

The Planning Assignment and Configuration System (PACS) 9 controls two functional elements. The first is a Resource Management Server (MRS) 91, which processes proposed changes and creates a schedule for changes to the VLAN provisioning, taking data from the WFMT 8 and the network data 4. The data sent to the PACS comprises an order request 910 to allocate the resources required for the change, and an activity request 911 to update the routing table, and an activity request to schedule the timing of the actual changes. These are acknowledged by the PACS 910a, 911 a, 931 a.

The Planning Assignment and Configuration System 9 handles these orders and configures any changes required to be implemented in the real network 1. Actual implementation is handled through an interface 93 referred to herein as the Manage Domain Activation (MDA) processor. In response to the implementation being reported to the WFMT (step 931a), the WFMT 8 reports to the UMT that a change has been made (step 76), causing the removal of the temporary cap that was placed on the alarm 5 that triggered the change. This allows the alarm system to once again monitor for overload and other conditions in the respective VLAN, so that the system may be alerted should an overload or other condition re-occur, as may occur for example because of further changes in usage, or because the original fix was not sufficient to overcome the original overload.

The changes made to the network 1 are also reported to the network data store 4 so that the data in the store tracks the current condition of the network.

## Claims

1. A process for management of a network resource used for provisioning of a plurality of virtual networks comprising the steps of:
monitoring the virtual networks for traffic volume,
identifying one or more of the virtual networks for which the traffic volume exceeds a predetermined threshold value,
and automatically generating a revision plan for the network resource to revise the network capacity allocated to the virtual network or networks so identified.

2. A process according to claim 1, in which the revision plan is implemented by re-programming a network resource facility.

3. A process according to claim 2, in which the revision plan is generated as an alert to a human interface, and the revision plan is implemented in response to an input from the human interface.

4. A process according to claim 3, in which there is provision for the input from the human interface to effect a modification to the revision plan.

5. A network resource for provisioning of a plurality of virtual networks, comprising:
means for monitoring the virtual networks for traffic volume,
means for identifying virtual networks for which the traffic volume exceeds a predetermined threshold value,
means for generating revisions to the network capacity allocated to the virtual networks so identified.

6. A network resource according to claim 5 in which the revision plan is implemented by re-programming a network resource facility.

7. A network resource according to claim 6, in which the revision plan is generated as an alert to a human interface, and the revision plan is implemented in response to an input from the human interface.

8. A network resource according to claim 7, in which there is provision for the input from the human interface to effect a modification to the revision plan.
